# EUROPEAN PATENT SPECIFICATION

(11) **EP 0 510 924 B1**
(45) Date of publication and mention of the grant of the patent: **23.09.1998**
(21) Application number: 92303575.2
(22) Date of filing: 22.04.1992
(51) Int. Cl.: G06K 15/02

(54) **Output method and apparatus employing the same**
Ausgabeverfahren und Vorrichtung, die dieses verwendet
Méthode de sortie et appareil l'utilisant

(30) Priority: 23.04.1991 JP 92306/91
(43) Date of publication of application: 28.10.1992
(60) Divisional application: 98200667.8
(73) Proprietor: CANON KABUSHIKI KAISHA, Tokyo (JP)
(72) Inventor: Takahashi, Hiroharu, c/o Canon Kabushiki Kaisha, Ohta-ku, Tokyo (JP)
(74) Representative: Beresford, Keith Denis Lewis

(56) References cited:
- EP-A- 0 388 160
- PATENT ABSTRACTS OF JAPAN vol. 14, no. 464 (M-1033) 9 October 1990 & JP-A-21 85 464
- IBM TECHNICAL DISCLOSURE BULLETIN. vol. 32, no. 9A, February 1990, NEW YORK US pages 168 - 169 , XP83031 'Resolution switching for supporting plotter graphics on a page printer'
- PATENT ABSTRACTS OF JAPAN vol. 12, no. 67 (M-673) 2 March 1988 & JP-A-62 212 163
- PATENT ABSTRACTS OF JAPAN vol. 13, no. 281 (M-842) 27 June 1989 & JP-A-10 75 252
- IBM SYSTEMS JOURNAL vol. 27, no. 2, 1988, ARMONK, NEW YORK US pages 234 - 245 R.K. DEBRY 'Architectures of Advanced Function Printing'

## Description

### BACKGROUND OF THE INVENTION

### Field of the Invention

The present invention relates to an output method and an apparatus employing such a method which requires a relatively small memory capacity in order to output information received from a host computer as high-density data.

### Description of the Related Art

Output apparatuses such as laser beam printers are generally used to output data from computers. Laser beam printers of low density, e.g. 300dpi, have been increasingly employed because of their quiet operation, reasonable price and compact size.

Recently, the development of a higher-density printer engine unit has been undertaken in order to further upgrade the print quality. A high-density printer engine of 600dpi has now been developed. A printer controller for such a printer engine analyzes printing information sent to it and, according to the analysis, develops the printing information over the bit map memory, at a designated density. In the known art, it is required for the printer controller to have a bit map memory capacity corresponding to the print density of the printer engine connected thereto. For example, the memory of the controller connected to a printer engine of 600dpi is required to be four times as large as that of the controller connected to a printer engine of 300dpi.

Since a controller for high-density printing (600dpi) must employ a bit map memory four times as large as that employed by a controller for low-density printing (300dpi),a high-density (600dpi) laser beam printer employing such a controller and engine becomes rather large and expensive, especially in a situation where color or half-tone images are to be formed.

An article entitled "IBM TECHNICAL DISCLOSURE BULLETIN. vol. 32, no. 9A, February 1990, NEW YORK US pages 168 - 169, XP83031 Resolution switching for supporting plotter graphics on a page printer" discloses a laser printer in which text data is converted into a dot pattern of high resoluion and graphic data is converted into low resolution dot data.

Further it is known in the art to divide the data for one page into a plurality of portions each representing a band of the page, and to rasterize the data of such bands into the bit map memory sequentially. Thus it is not necessary to have a bit map memory which is big enough to rasterize a hole page of data at a given resolution (see e.g. EP-A-0 167 166).

It is a concern of the present invention to solve the above-mentioned problems by providing an output method and an apparatus wherein data received, e.g. from a host computer, is analyzed, and wherein, according to the analysis, one page of the data of text description is divided into portions (or bands) to be serially developed as a high-density image (600dpi) on the bit map memory (band processing) and to be serially printed, and one page of the data of graphic description is developed as a low-density image (300dpi) on the bit map memory and is smoothed before output.

In accordance with a first aspect of the present invention there is provided printing apparatus as set out in claim 1.

In accordance with a second aspect of the invention there is provided a printing method as set out in claim 7.

An embodiment of the present invention provides an output method and an output apparatus wherein highly-defined printing can be performed by a high-density (600dpi) laser beam printer employing a bit map memory having the same capacity as the bit map memory employed in a conventional printer controller of low-density printing (300dpi).

Further features and advantages of the present invention will become apparent in the following description of the preferred embodiments with reference to the attached drawings.

### BRIEF DESCRIPTION OF THE DRAWINGS

Fig. 1 is a block diagram of the basic construction of a printing apparatus according to one embodiment of the present invention.

Fig. 2, comprising Figs. 2(A) and 2(B), is a flowchart of printing control according to the embodiment illustrated in Fig. 1.

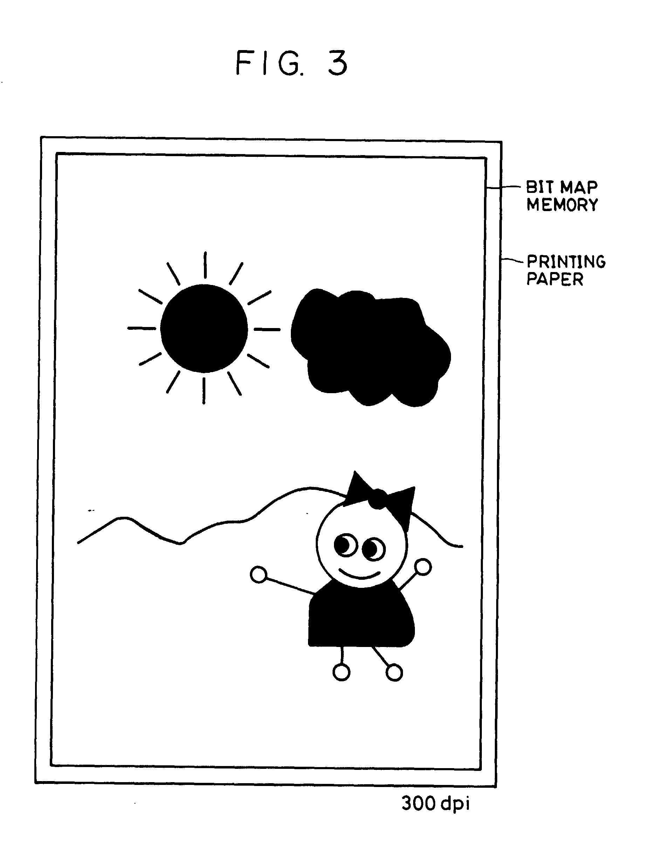

Fig. 3 illustrates a bit map memory for graphic data.

Fig. 4 illustrates a bit map memory for text data.

Fig. 5, comprising Figs 5(A) and 5(B), is a flowchart of printing control according to another embodiment of the present invention.

Fig. 6 illustrates the internal construction of a laser beam printer according to the present invention.

Fig. 7 shows exemplary commands.

### DETAILED DESCRIPTION OF THE PREFERRED EMBODIMENTS

### [One Embodiment]

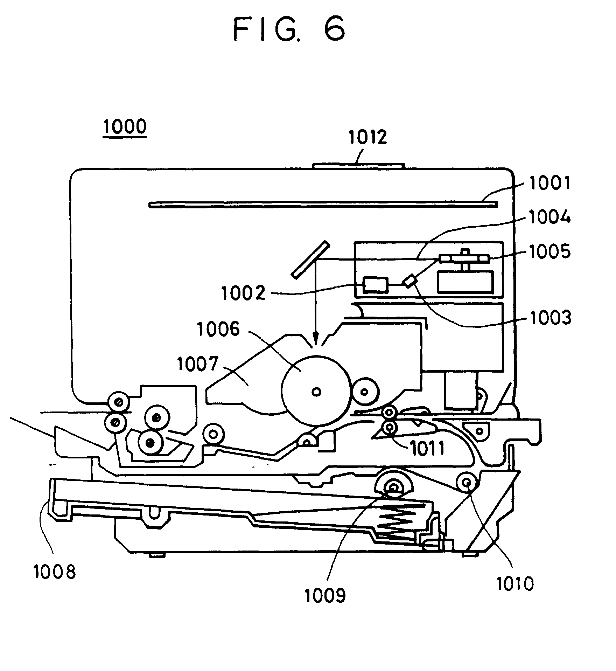

Fig. 6 shows a laser beam printer (referred to as "an LBP" hereinafter) according to this embodiment, which is able to register character patterns and form data received from a data source, i.e. a host computer (not shown).

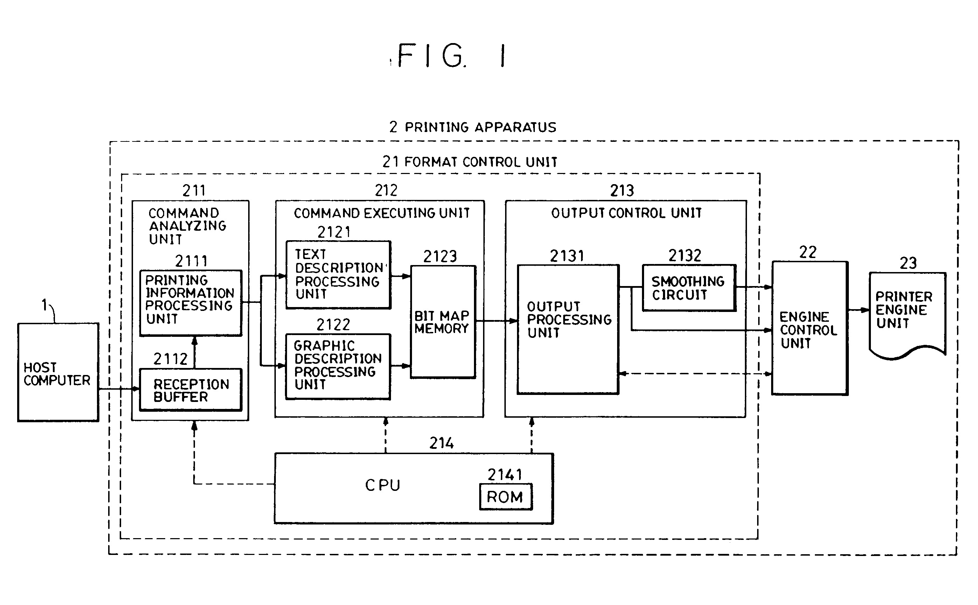

Referring to Fig. 6, an LBP 1000 (corresponding to numeral 2 in Fig. 1) receives and stores the information from a host computer (denoted by numeral 1 in Fig. 1), e.g. character information (character code), form data and macro instructions. According to the information, the LBP 1000 generates character patterns, form patterns, etc., to form an image on a recording medium such as recording paper. An operation panel 1012 has a switch, an LED display, etc. arranged thereon. A printer control unit 1001 performs overall control of the LBP and analyzes information, such as character information, received from the host computer. The printer control unit 1001 converts the character data into video signals of the corresponding character patterns and sends the video signals to a laser driver 1002.

The laser driver 1002 is a circuit which drives a semiconductor laser 1003. According to the video signals from the printer control unit 1001, the laser driver 1002 switches on and off the laser beam emission of the semiconductor laser 1003. The laser beam 1004 is reflected by a rotary polygon mirror 1005 for scanning the surface of an electrostatic drum 1006. An electrostatic latent image of the character patterns is thus formed on the electrostatic drum 1006. The latent image is developed by a developer unit 1007 provided near the surface of the electrostatic drum 1006. The developed image is transferred to recording paper. The recording paper used is of a cut-sheet type. The cut-sheet recording papers are stored in a paper cassette 1008, which is mounted to the LBP 1000. A pick-up roller 1009 and conveying rollers 1010, 1011 feed a cut-sheet recording paper from the cassette 1008 to the electrostatic drum 1006 inside the apparatus.

The construction of the system according to this embodiment is illustrated in Fig. 1. In this figure, a host computer 1 outputs printing data including print data and control codes to a printing apparatus 2.

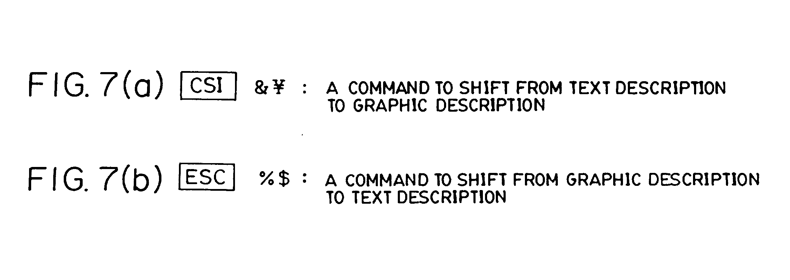

The printing apparatus 2 is composed of format control unit 21, an engine control unit 22 and a printer engine unit 23. The format control unit 21 is in turn composed of a command analyzing unit 211, a command executing unit 212, and an output control unit 213, and the format control unit 21 comprises a printing control means according to the present invention. The printing information from the host computer 1 is stored in a reception buffer 2112, and is analyzed by a printing information processing unit 2111. The information processing unit 2111 determines whether the received printing information is a command concerning text description or a command concerning graphic description or a command of another kind. Fig. 7(a) shows a representative command for graphic description. If processing unit 2111 encounters a command like that in Fig. 7(A), then graphic description processing is performed. If, on the other hand, processing unit 2111 encounters a command like that in Fig. 7(b), which is a representative command for text description, then text description processing is performed.

Commands not concerning text or graphic description are executed by a command analyzing unit 211. A command concerning description is executed by a command executing unit 212. In the text description processing, text data is operated by a text description processing unit 2121, and the processed data is serially developed into dot data over a bit map memory 2123. In the graphic description processing, graphic data is operated by a graphic description processing unit 2122, and the processed data is serially developed into dot data over a bit map memory 2123. The developed dot data in either of the processings is serially sent to an output processing unit 2131 of an output control unit 213. The output processing unit 2131 converts the data from the bit map memory 2123 into a video signal. Graphic description data is processed to upgrade print quality by a smoothing circuit 2132 before conversion to a video signal. The video signal is outputted to the engine control unit 22. The output processing unit 2131 also exchanges information, as depicted by the dotted arrow, such as engine control commands and the status of various actions of a printer engine, with the engine control unit 22 in order to adjust the timing of image transfer to the engine control unit 22. A CPU 214 controls the overall control system of the format control unit 214, according to the control program of the CPU 214 stored in a ROM 2141. The engine control unit 22 controls various printing means of a printer engine unit 23. The printer engine unit 23 forms a permanently visible image on recording paper from the image described on the bit map memory according to the printing information received from the host computer.

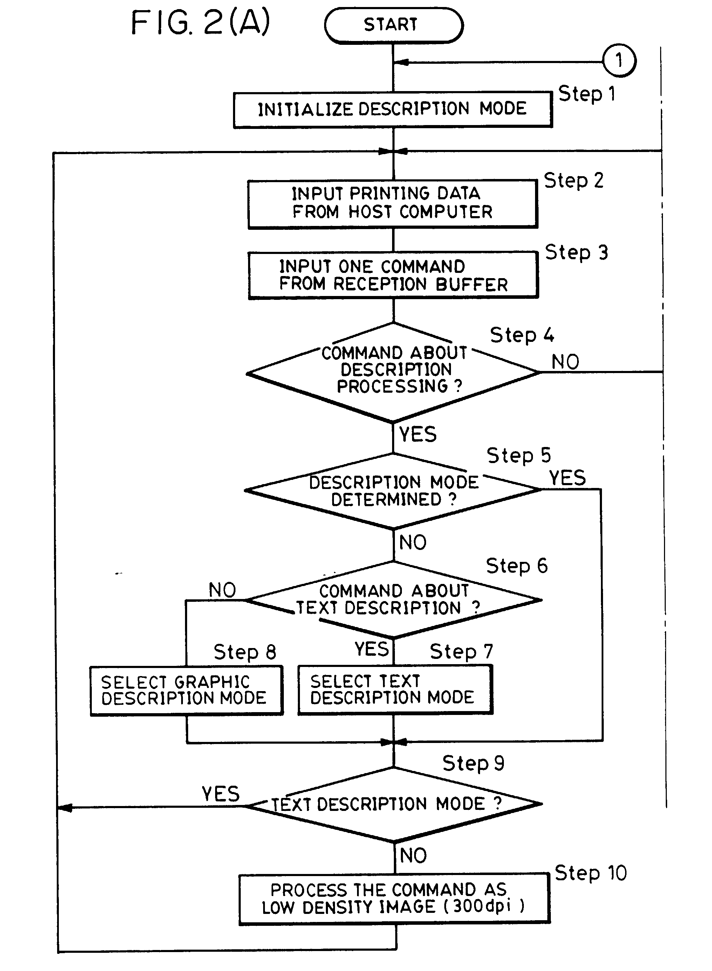

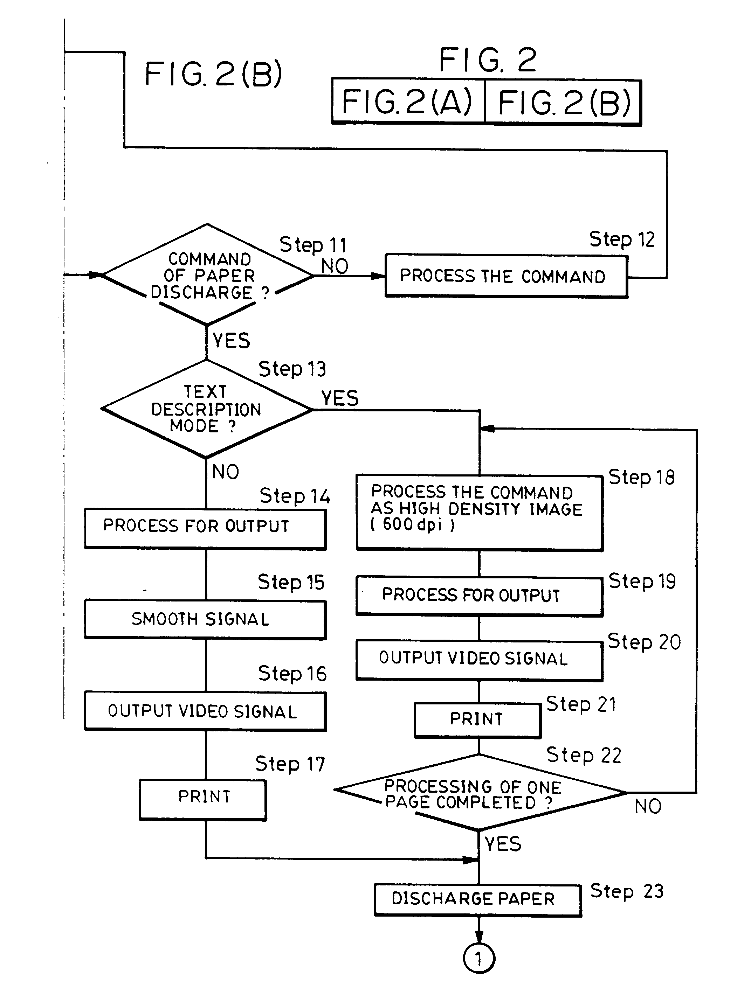

The processing procedure according to this embodiment will be described with reference to the flowchart shown in Fig. 2. The processing steps are denoted by numerals 1 to 23. Before starting the print processing of one page, the description mode is initialized (Step 1). The printing data from the host computer 1 is stored in the reception buffer 2112 (Step 2). The printing information processing unit 2111 retrieves one command from the reception buffer 2112 (Step 3). The printing information processing unit 2111 finds out whether the retrieved command is a command concerning text or graphic description processing (Step 4). If it is a description-concerning command, processing proceeds to Step 5.

At step 5, it is checked whether the description mode has been determined. If it has been determined, processing proceeds to Step 9 without changing description modes. If it has not been determined, the printing information processing unit 2111 checks whether the retrieved command is a text description command or a graphic description command (Step 6). If it is a text description command, the text description mode is selected (Step 7). If it is a graphic description command, the graphic description mode is selected (Step 8).

At Step 9, it is checked whether the determined description mode is the text mode or the graphic mode. If it is the graphic description mode, processing proceeds to Step 10, where the graphic description processing unit 2122 develops the received graphic description command into dot data on the bit map memory 2123 to describe one page of a low-density (300dpi) image thereon. When the description processing is completed, the procedure returns to Step 2. If, on the other hand, the description mode is the text description mode, the text description processing is performed but first processing from Step 2 to Step 9 is repeated until a paper-discharge command is retrieved.

If it is determined that the retrieved command is not a command concerning the description processing at Step 4, the procedure goes to Step 11, where it is determined whether the command is a paper-discharge command. If it is not a paper-discharge command, the command analyzing unit 211 executes the command (Step 12), and the procedure returns to Step 2.

If it is determined that the command is a paper-discharge command at Step 11, the procedure goes to Step 13, where it is determined whether the mode is the graphic description mode or the text description mode.

In the graphic mode, the procedure goes to step 14, where the output processing is performed. In output processing, the output processing unit 2131 exchanges information, such as engine control commands or the status of various actions of the printer engine, with the engine control unit 22 and, thus, adjusts the timing of image transfer to the engine control unit 22. For example, the print resolutions at Step 17 and Step 21 are different from each other, and the appropriate resolution is set in output processing. The resolution can be changed by known means such as by varying beam clock frequency, and/or paper-feeding speed.

After output processing (Step 14), the content of the bit map memory 2123 is smoothed by the smoothing circuit 2134 (Step 15). The smoothed signals are converted to video signals to be outputted to the engine control unit 22 (Step 16). In smoothing-out processing, notches of the dot pattern are smoothed out, e.g. by reducing the diameter of the dots, in accordance with known technique such as those described in U.S. Patent No. 4,878,068.

The engine control unit 22 performs print processing, i.e. controls various printing means of the printer engine unit 23 (Step 17). Then, the printer engine unit 23 forms a permanently visible image on recording paper and discharges such recording paper (Step 23). When the above-described processing is completed, the procedure returns to Step 1.

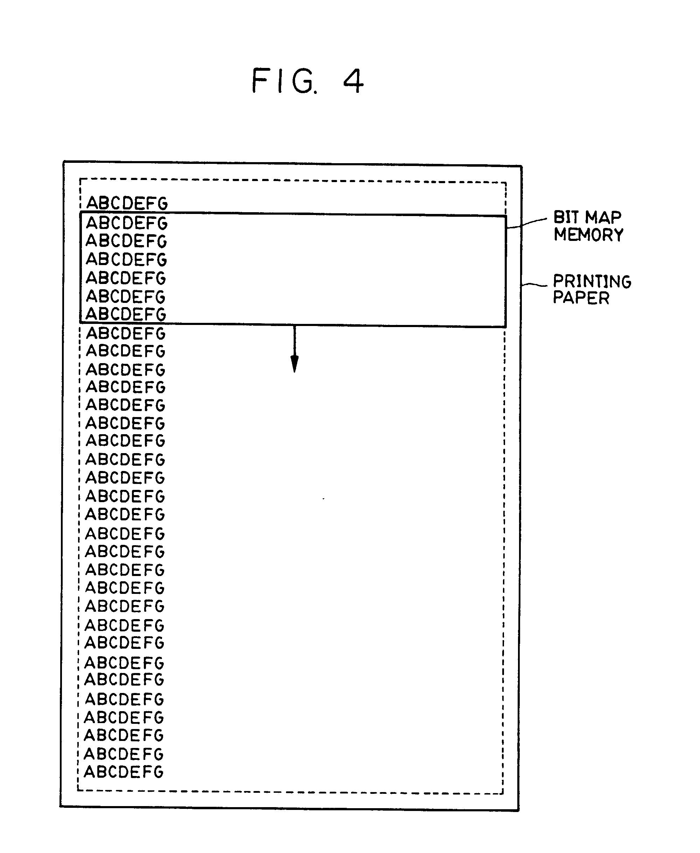

In the text description mode, the procedure goes from Step 13 to Step 18, where the text description processing unit 2121 develops dot data at a high-density image (600dpi) from the retrieved text description command, on the bit map memory 2123. The capacity of the bit map memory 2123 is not so large as to store an entire page of a high-density image (600dpi). Thus, the bit map memory 2123 stores, at any one time, only a portion (or band) thereof (e.g., a quarter of the page) defined by a virtual window assumed to move over the page of the printing paper on which the current printing is to be made, as shown in Fig. 4. In the text description mode, the above-mentioned description processing to the bit map memory 2123 is performed simultaneously with conversion processing of data to video signals and print processing. In other words, the virtual window moves in the direction indicated by the arrow in Fig. 4, at the same speed as the printing paper is conveyed. Processing of Steps 18 to 22 are simultaneously performed. At Step 19, the output processing unit 2131 exchanges information, such as engine control commands or the status of various actions of the printer engine, with the engine control unit 22 in order to adjust the timing of image transfer to the engine control unit 22. At Step 20, the dot data of the bit map memory 2123 is directly converted to video signals to be outputted to the engine control unit 22. At Step 21, the engine control unit 22 performs print processing by controlling various printing means of the printer engine unit 23. Also, the printer engine unit 23 prints a permanently visible image on the printing paper. The processing of Steps 18 to 21 is repeated until one page of the printing is completed (Step 22). When it is completed, the printed paper is discharged (Step 23).

When the above-described processing is completed, the procedure returns to Step 1.

### [Another embodiment]

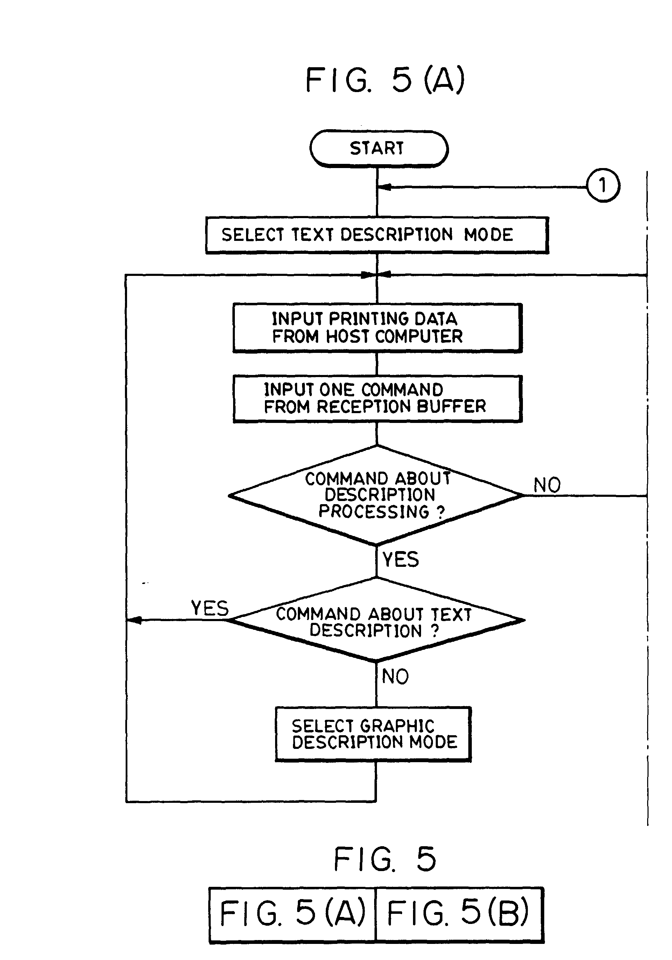

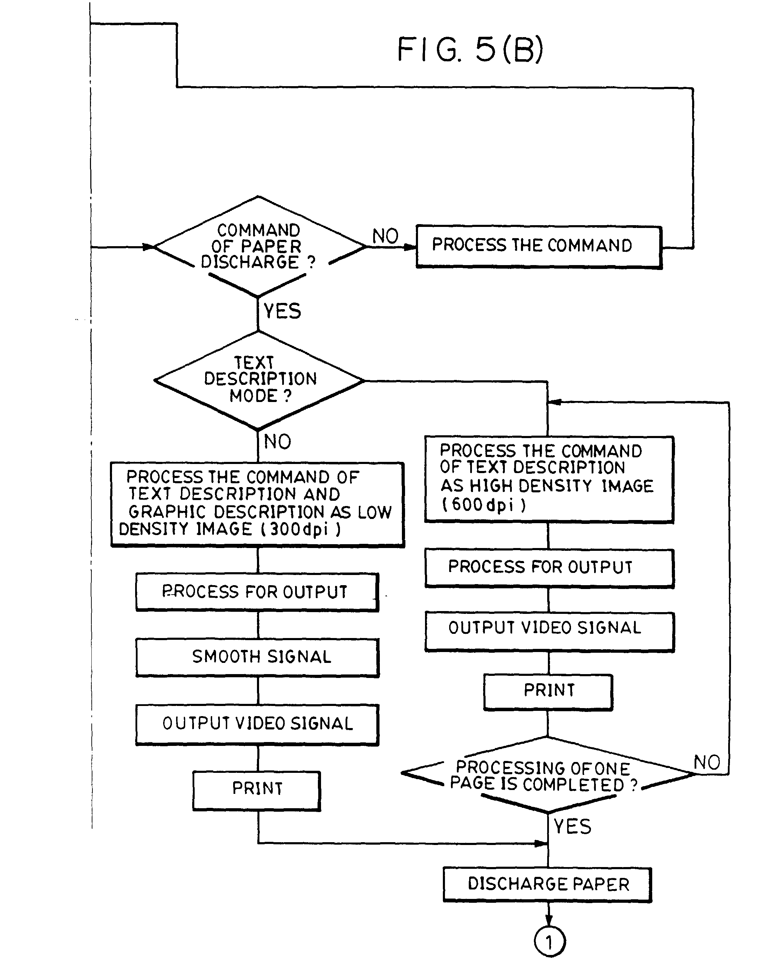

In the above embodiment, the description mode is selected according to the analysis of inputted information (e.g. expressed in page description language). In this embodiment as illustrated in Fig. 5, each command retrieved is examined whether it is a text description command or a graphic description command. If the one page of retrieved data are all text description commands, the one page of data are divided into portions to be serially developed as a high-density image (600dpi) on the bit map memory (band processing) and to be serially printed. If the one page of retrieved data includes any number of graphic description commands, the one page of data are developed as a low-density image (300dpi) on the bit map memory. The developed dot data are smoothed for outputting.

As described above, in an output method according to the present invention, the print density is changed according to the kind of printing. Therefore, if this method is employed, a bit map memory of large capacity is not required. Highly-defined printing can be performed by a high-density (600dpi) laser beam printer employing a bit map memory having the same capacity as the bit map memory employed in a conventional printer controller of low-density printing (300dpi).

While the present invention has been described with respect to what is presently considered to be the preferred embodiments, it is to be understood that the invention is not limited to the disclosed embodiments.

## Claims

1. A printing apparatus comprising:
analyzing means (21, 2111) for analyzing input data received as pages from an external device;
developing means (212, 2121, 2122) for developing the input data into output data of different resolutions under the control of control means (214) and in accordance with the output of said analyzing means;
a memory (2123) for storing the output data; and
output means (213) for reading and outputting the stored output data;
and characterised in that the control means is arranged to operate the memory in response to the output of the analyzing means so that where the developed output data is at a higher resolution, said output data is divided into portions stored in the memory and read from the memory in a sequence of steps so that in each step one portion of the output data is written into the memory and read out by the output means.

2. Apparatus according to claim 1, wherein said analyzing means determines whether the input data is text data or graphic data.

3. Apparatus according to claim 2, wherein said analyzing means are adapted to receive input data in a page description language which includes text description commands and graphic description commands, and wherein when said data is analyzed as text data said developing means partitions the text data into bands which are successively written into and read out of said memory.

4. Apparatus according to any one of the preceding claims, and further comprising smoothing means (2132) for smoothing data read from said memory.

5. Apparatus according to claim 4, wherein said smoothing means are adapted to smooth output data so as to increase the resolution of the output data to correspond to the resolution of a printer associated with the apparatus.

6. Apparatus according to claim 4 or claim 5, wherein the smoothing means is adapted to smooth dot data by interpolation.

7. A printing method comprising:
analyzing input data received as pages from an external device;
developing the input data into output data of different resolutions under the control of control means (214) and in accordance with the result of said analysis;
storing the output data in a memory; and
reading and outputting the stored output data;
the method being characterised in that the control means operates the memory in response to the result of the analysis means so that where the developed output data is at a higher resolution, said output data is divided into portions stored in the memory and read from the memory in a sequence of steps so that in each step one portion of the output data is written into the memory and read out by the output means.

8. A method according to claim 7, wherein said analysis determines whether the input data is text data or graphic data.

9. A method according to claim 3, wherein said analysis is carried out on input data in a page description language which includes text description commands and graphic description commands, and wherein when said data is analyzed as text data the data is partitioned into bands which are successively written into and read out of said memory.

10. A method according to any one of claims 7 to 9, and further comprising smoothing data read from said memory.

11. A method according to claim 10, wherein said smoothing means are adapted to smooth output data so as to increase the resolution of the output data to correspond to the resolution of a printer associated with the apparatus.

12. A method according to any one of claims 7 to 11, and including printing the data read from the memory and wherein the operation mode cannot be switched during the printing operation.

## Patentansprüche

1. Druckgerät mit
einer Analyseeinrichtung (21, 2111) zur Analyse von Eingabedaten, die als Seiten von einer externen Vorrichtung empfangen werden,
einer Entwicklungseinrichtung (212, 2121, 2122) zur Entwicklung der Eingabedaten in Ausgabedaten verschiedener Auflösungen unter der Steuerung einer Steuereinrichtung (214) und entsprechend dem Ausgangssignal der Analyseeinrichtung,
einem Speicher (2123) zur Speicherung der Ausgabedaten und
einer Ausgabeeinrichtung (213) zum Lesen und Ausgeben der gespeicherten Ausgabedaten,
**dadurch gekennzeichnet, daß**
die Steuereinrichtung zum Betreiben des Speichers im Ansprechen auf das Ausgangssignal der Analyseeinrichtung eingerichtet ist, so daß, wenn die entwickelten Ausgabedaten eine höhere Auflösung aufweisen, die Ausgabedaten in in dem Speicher gespeicherte Abschnitte eingeteilt werden und in einer Folge von Schritten aus dem Speicher gelesen werden, so daß in jedem Schritt ein Abschnitt der Ausgabedaten in den Speicher geschrieben und durch die Ausgabeeinrichtung ausgelesen wird.

2. Gerät nach Anspruch 1, **dadurch gekennzeichnet, daß**
die Analyseeinrichtung bestimmt, ob die Eingabedaten Textdaten oder Graphikdaten sind.

3. Gerät nach Anspruch 2, **dadurch gekennzeichnet, daß**
die Analyseeinrichtung zum Empfang von Eingabedaten in einer Seitenbeschreibungssprache eingerichtet ist, die Textbeschreibungsbefehle und Graphikbeschreibungsbefehle enthält, wobei, wenn die Daten als Textdaten analysiert werden, die Entwicklungseinrichtung die Textdaten in Streifen aufteilt, die aufeinanderfolgend in den Speicher geschrieben und aus dem Speicher ausgelesen werden.

4. Gerät nach einem der vorhergehenden Ansprüche, **gekennzeichnet durch**
eine Glättungseinrichtung (2132) zur Glättung von aus dem Speicher gelesenen Daten.

5. Gerät nach Anspruch 4, **dadurch gekennzeichnet, daß**
die Glättungseinrichtung zum Glätten von Ausgabedaten zur Erhöhung der Auflösung der Ausgabedaten eingerichtet ist, um der Auflösung eines dem Gerät zugeordneten Druckers zu entsprechen.

6. Gerät nach Anspruch 4 oder 5, **dadurch gekennzeichnet, daß**
die Glättungseinrichtung zum Glätten von Punktdaten durch Interpolation eingerichtet ist.

7. Druckverfahren mit den Schritten
Analysieren von Eingabedaten, die als Seiten von einer externen Vorrichtung empfangen werden,
Entwickeln der Eingabedaten in Ausgabedaten verschiedener Auflösungen unter der Steuerung einer Steuereinrichtung (214) und entsprechend dem Ergebnis der Analyse,
Speichern der Ausgabedaten in einem Speicher und
Lesen und Ausgeben der gespeicherten Ausgabedaten,
**dadurch gekennzeichnet, daß**
die Steuereinrichtung den Speicher im Ansprechen auf das Ergebnis der Analyse betreibt, so daß, wenn die entwickelten Ausgabedaten eine höhere Auflösung aufweisen, die Ausgabedaten in in dem Speicher gespeicherte Abschnitte eingeteilt werden und aus dem Speicher in einer Folge von Schritten gelesen werden, so daß in jedem Schritt ein Abschnitt der Ausgabedaten in den Speicher geschrieben und durch die Ausgabeeinrichtung ausgelesen wird.

8. Verfahren nach Anspruch 7, **dadurch gekennzeichnet, daß**
bei der Analyse bestimmt wird, ob die Eingabedaten Textdaten oder Graphikdaten sind.

9. Verfahren nach Anspruch 8, **dadurch gekennzeichnet, daß**
die Analyse bei Eingabedaten in einer Seitenbeschreibungssprache ausgeführt wird, die Textbeschreibungsbefehle und Graphikbeschreibungsbefehle enthält, wobei, wenn die Daten als Textdaten analysiert werden, die Daten in Streifen aufgeteilt werden, die aufeinanderfolgend in den Speicher geschrieben und aus dem Speicher ausgelesen werden.

10. Verfahren nach einem der Ansprüche 7 bis 9, **gekennzeichnet durch** den Schritt
Glätten von aus dem Speicher gelesenen Daten.

11. Verfahren nach Anspruch 10, **dadurch gekennzeichnet, daß**
die Glättungseinrichtung zum Glätten von Ausgabedaten zur Erhöhung der Auflösung der Ausgabedaten eingerichtet ist, um der Auflösung eines dem Gerät zugeordneten Druckers zu entsprechen.

12. Verfahren nach einem der Ansprüche 7 bis 11, **gekennzeichnet durch** den Schritt
Drucken der aus dem Speicher gelesenen Daten, bei die Betriebsart während des Druckvorgangs nicht umgeschaltet werden kann.

## Revendications

1. Appareil d'impression comprenant :
un moyen d'analyse (21, 2111) pour analyser les données d'entrée reçues d'un dispositif externe sous forme de pages ;
un moyen de développement (212, 2121, 2122) pour transformer les données d'entrée en données de sortie de résolutions différentes sous le contrôle d'un moyen de commande (214) et en fonction de la sortie dudit moyen d'analyse ;
une mémoire (2123) pour stocker les données de sortie; et un moyen de sortie (213) pour lire et délivrer les données de sortie stockées ;
et caractérisé en ce que le moyen de commande est conçu pour commander la mémoire en fonction de la sortie du moyen d'analyse pour que, lorsque les données de sortie développées ont une résolution supérieure, lesdites données de sortie sont divisées en parties stockées dans la mémoire et lues dans la mémoire selon une séquence d'étapes pour que, à chaque étape, une seule partie des données de sortie soit écrite dans la mémoire et lue par le moyen de sortie.

2. Appareil selon la revendication 1, dans lequel ledit moyen d'analyse détermine si les données d'entrée sont des données de texte ou des données graphiques.

3. Appareil selon la revendication 2, dans lequel ledit moyen d'analyse est adapté pour recevoir des données d'entrée dans un langage de description de pages qui inclut des commandes de description de texte et des commandes de description graphique et dans lequel, lorsque lesdites données sont analysées comme données de texte, ledit moyen de développement découpe les données de texte en bandes qui sont successivement écrites et lues dans ladite mémoire.

4. Appareil selon l'une quelconque des revendications précédentes et comprenant, en outre, un moyen de lissage (2132) pour lisser les données lues dans ladite mémoire.

5. Appareil selon la revendication 4, dans lequel ledit moyen de lissage est conçu pour lisser les données de sortie afin d'en augmenter la résolution de ces dernières pour la faire correspondre à la résolution d'une imprimante associée à l'appareil.

6. Appareil selon la revendication 4 ou la revendication 5, dans lequel le moyen de lissage est conçu pour lisser les données de points par interpolation.

7. Procédé d'impression consistant à :
analyser les données d'entrée reçues d'un dispositif externe sous forme de pages ;
transformer les données d'entrée en données de sortie de résolutions différentes sous le contrôle du moyen de commande (214) et en fonction du résultat de ladite analyse;
stocker les données de sortie dans une mémoire ; et
lire et délivrer les données de sortie stockées ;
le procédé étant caractérisé en ce que le moyen de commande pilote la mémoire en fonction du résultat du moyen d'analyse pour que, lorsque les données de sortie développées ont une résolution supérieure, lesdites données de sortie soient divisées en parties stockées dans la mémoire et lues dans la mémoire selon une séquence d'étapes pour que, à chaque étape, une seule partie des données de sortie soit écrite dans la mémoire et lue par le moyen de sortie.

8. Procédé selon la revendication 7, dans lequel ladite analyse détermine si les données d'entrée sont du texte ou des données graphiques.

9. Procédé selon la revendication 3, dans lequel ladite analyse est réalisée sur les données d'entrée en un langage de description de pages qui inclut des commandes de description de texte et des commandes de description graphique et dans lequel lorsque lesdites données sont analysées et considérées comme données de texte, les données sont découpées en bandes qui sont écrites et lues successivement dans ladite mémoire.

10. Procédé selon l'une quelconque des revendications 7 à 9, et comprenant, en outre, les données de lissage lues dans ladite mémoire.

11. Procédé selon la revendication 10, dans lequel ledit moyen de lissage est conçu pour lisser les données de sortie afin d'en augmenter la résolution pour la faire correspondre à la résolution d'une imprimante associée à l'appareil.

12. Procédé selon l'une quelconque des revendications 7 à 11 et incluant l'impression des données lues dans la mémoire et dans lequel il ne peut y avoir commutation du mode de fonctionnement pendant l'opération d'impression.
